# FASCICULE DE BREVET EUROPEEN

(11) **EP 0 465 385 B1**
(45) Date de publication et mention de la délivrance du brevet: **11.01.1995**
(21) Numéro de dépôt: 91420210.6
(22) Date de dépôt: 26.06.1991
(51) Int. Cl.: A01G 9/12

(54) **Tuteur pour plantes à liens intégrés**
Stützpfahl für Pflanzen mit integrierten Bändern
Stake for plants with incorporated ties

(30) Priorité: 29.06.1990 FR 9008710
(43) Date de publication de la demande: 08.01.1992
(73) Titulaire: PECHINEY BATIMENT, 77524 Coulommiers Cédex (FR)
(72) Inventeur: Vereycken, Serge, F-77580 Guerard (FR); Seraphin, Léon, F-69370 Saint Didier au Mont d'Or (FR)
(74) Mandataire: Mougeot, Jean-Claude

(56) Documents cités:
- CA-A- 897 966
- FR-A- 2 371 872
- US-A- 4 386 480

## Description

L'invention concerne un tuteur pour plantes à liens intégrés.

On connait par la demande de brevet français FR-A-2 572 250 des tuteurs munis de liens intégrés; cependant dans ce cas, les liens sont situés à des positions déterminées le long du tuteur et sont de longueurs prédéterminées. Ils ne peuvent donc pas être adaptés à la morphologie et au "volume" de la plante à tuteurer.

De même, on connait par le document CA-A-897 966 un tuteur pour plantes constitué d'un montant creux (11), muni d'une pointe (13) et d'ouvertures locales (23, 24) en forme de trou de serrure dans lesquelles s'engagent les parties élargies (25) des liens (12). Les liens ont donc une position déterminée par rapport à la hauteur de la plante.

L'invention se propose de résoudre cette difficulté. Le tuteur, selon l'invention est donc constitué d'un montant de forme allongée, comportant une ou plusieurs rainures externes et longitudinales s'étendant jusqu'aux extrémités du montant, ayant en section droite une ouverture à une dimension plus faible que celle du corps de la rainure. Dans les rainures se trouvent des excroissances des liens. Leur nombre total peut aller jusqu'à 6. Le tuteur comporte une coiffe et une pointe effilé, ces deux éléments étant éventuellement amovibles, et ayant éventuellement la même forme externe. La pointe permet évidemment d'enfoncer le tuteur dans le sol, avec un effort réduit.

Dans une réalisation générale, le montant est une barre pleine ou un tube à paroi épaisse. Cependant, il est ainsi possible de réaliser un tel tuteur en ménageant une fente dans un profilé tubulaire à paroi mince, la partie creuse du tube jouant alors le rôle du corps des rainures externes. Le montant peut-être fabriqué en une matière quelconque, suffisamment résistante et résiliente, cependant il est préférable qu'il soit réalisé en un métal ou alliage approprié et de préférence en Al ou ses alliages. Il peut être de section droite quelconque, mais on adopte de préférence des contours géométriques simples, tels que rond, carré, etc... Les liens sont de préférence réalisés avec des matériaux généralement utilisés en jardinage tels que fils métalliques, raphia, plastique, plastique armé d'un fil métallique, etc... Leur longueur est de préférence adaptée au volume et à la morphologie de la plante à tuteurer. En cas de lien double, il est muni dans sa partie centrale d'un noeud ou d'un vrillage, formant excroissance, ce qui permet de les enfiler à frottement doux et de les retenir dans les rainures; on peut ainsi les déplacer facilement le long du montant, et ils y restent alors en place. L'ouverture de chaque rainure est généralement comprise entre une et deux fois l'épaisseur ou le diamètre des brins. Bien sûr, la surface externe du montant peut être brute ou revêtue d'un revêtement approprié (peinture, laque, etc...). La coiffe et la pointe qui sont de préférence en matière plastique ont de préférence une forme cylindro-conique; ils empêchent les liens de s'échapper accidentellement du montant lors du transport, du stockage, de la vente, et...

Les méthodes de fabrication des tuteurs selon l'invention, sont principalement le filage pour les montants pleins ou tubulaires épais; pour les montants tubulaires minces, ne comportant qu'une fente, on préfère généralement le roulage longitudinal d'une bande métallique, par suite de sa facilité de fabrication et du coût moins élevé.

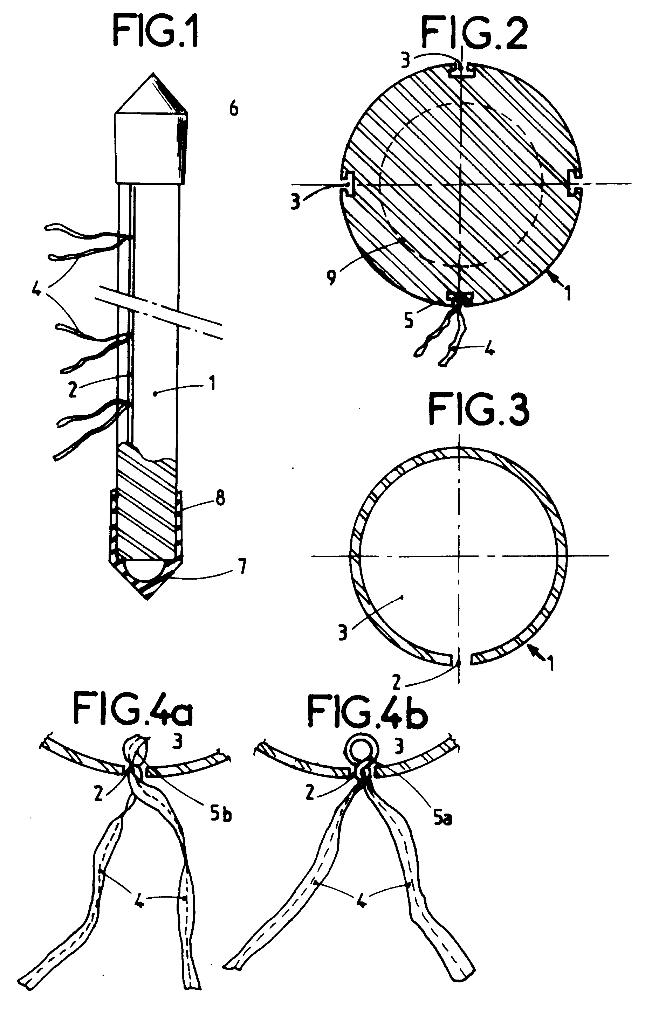

L'invention sera mieux comprise à l'aide des exemples de réalisations suivantes, illustrés par les figures 1 à 4.

La Figure 1 représente la vue en élévation avec coupe partielle à une extrémité d'un tuteur selon l'invention.
. La Figure 2 représente une section droite du tuteur de la Figure 1.
. La Figure 3 représente la section droite d'une autre version du tuteur selon l'invention.
. Les Figures 4a et 4b représentent deux modes de réalisations de l'excroissance centrale d'un lien double.

Sur la Figure 1, le corps du tuteur est constitué d'un montant 1 de section circulaire comportant des rainures 4 longitudinales (une seule étant représentée), dont la section droite, en forme de T, est reportée en Figure 2. Dans cette rainure sont glissés les liens 4 comportant un vrillage 5a ou un noeud 5b, de préférence, sensiblement en leur centre. Dans cette réalisation, le montant est réalisé en alliage 6060 (selon la désignation de l'Aluminium Association) filé.

Le montant porte à chacune de ses extrêmités, d'une part une coiffe emboîtée 6, d'autre part une pointe emboîtée 7, dont la forme est cylindro-conique. Cette coiffe et cette pointe sont réalisées en polypropylène et comportent un embrèvement 8 de forme complémentaire de l'extrêmité du montant 1.

Dans un autre type de réalisation, le montant peut avoir la forme annulaire représentée en 9 (traits interrompus) de la Figure 2. La longueur et le diamètre (ou dimension(s) transversale(s)) du montant sont adaptés aux plantes à supporter.

A titre d'exemple, les longueurs peuvent varier de 0,60 à 2,5 m et les diamètres de 6 à 14 mm. La largeur de l'ouverture 2 est généralement comprise entre 0,5 et 1 mm. La longueur des liens est adaptée aux plantes à supporter; elle est généralement comprise entre 0,10 et 0,20 m.

A titre indicatif, un tuteur selon la figure 3 possède les caractéristiques suivantes:
Diamètre 10 mm, ouverture: 0,7 mm; épaisseur: 1 mm
Le tuteur selon l'invention offre sur les tuteurs de l'art antérieur les avantages suivants :
- Facilité de fabrication et faible coût de revient.
- Possibilité d'adapter le nombre, la position et la longueur des liens à la morphologie et au "volume" de la (ou des) plante(s) à tuteurer.
- Possiblité de tuteurer plusieurs plantes à un seul tuteur.
L'utilisation d'un montant en métal ou alliage présente par ailleurs les avantages suivants :
- Pérennité par rapport au bois.
- Non vieillissement et résilience par rapport aux matières plastiques.

De plus, l'Al et ses alliages ne sont pas sujet à la rouille, et sont légers.

## Revendications

1. Tuteur pour plantes à liens intégrés equipés d'excroissances (5a, 5b), comportant un montant (1) de forme allongée muni d'une pointe (7) effilée et au moins une rainure longitudinale externe ayant en section droite une ouverture de dimension plus faible que le corps de la rainure et dans laquelle s'engage l'excroissance (5a, 5b) des liens (4) caractérisé en ce que cette rainure s'étend jusqu'aux extrémités du montant (1) et en ce que le tuteur est muni d'une coiffe effilée (6) et d'une pointe (7) emboîtées aux extrémités dudit montant (1).

2. Tuteur selon la revendication 1 caractérisé en ce que le tuteur comporte jusqu'à 6 rainures.

3. Tuteur selon l'une des revendications 1 ou 2 caractérisé en ce que le montant (1) est une barre pleine.

4. Tuteur selon l'une des revendications 1 ou 2 caractérisé en ce que le montant (1) est un tube à paroi épaisse.

5. Tuteur selon l'une des revendications 1 à 2 caractérisé en ce que le montant (1) est un tube mince quasi-fermé.

6. Tuteur selon l'une des revendications 1 à 5 caractérisé en ce que la coiffe (6) et la pointe (7) sont de forme cylindro-conique.

7. Tuteur selon l'une des revendications 1 à 6 caractérisé en ce que la coiffe (6) et la pointe (7) sont identiques.

8. Tuteur selon l'une des revendications 1 à 7 caractérisé en ce que le montant (1) est métallique.

9. Tuteur selon la revendication 7 caractérisé en ce que le montant (1) est en Al ou un de ses alliages.

10. Tuteur selon l'une des revendications 1 à 8 caractérisé en ce que la coiffe (6) et la pointe (7) sont en matière plastique.

## Claims

1. Plant stake with integral ties with protrusions (5a, 5b), comprising an upright (1) of an elongated shape, with a tapering point (7) and at least one longitudinal external groove which in cross-section has an opening of a size which is smaller than the body of the groove and in which the protrusion (5a, 5b) of the ties (4) engages, characterised in that this groove extends to the extremities of the upright (1) and in that the stake has a tapering cap (6) and a point (7) which interlock with the extremities of said upright (1).

2. Stake according to claim 1, characterised in that the stake comprises up to 6 grooves.

3. Stake according to one of claims 1 or 2, characterised in that the upright (1) is a solid bar.

4. Stake according to one of claims 1 or 2, characterised in that the upright (1) is a tube with a thick wall.

5. Stake according to one of claims 1 to 2, characterised in that the upright (1) is a thin tube which is virtually closed.

6. Stake according to one of claims 1 to 5, characterised in that the cap (6) and the point (7) are shaped as cone-ended cylinders.

7. Stake according to one of claims 1 to 6, characterised in that the cap (6) and the point (7) are identical.

8. Stake according to one of claims 1 to 7, characterised in that the upright (1) is metallic.

9. Stake according to claim 7, characterised in that the upright (1) is made of Al or one of the alloys thereof.

10. Stake according to one of claims 1 to 8, characterised in that the cap (6) and the point (7) are made of plastics material.

## Patentansprüche

1. Stützpfahl für Pflanzen mit integrierten, mit Ausstülpungen (5a, 5b) versehenen Bändern, bestehend aus einem Pfahl (1) von länglicher Form, der mit einer konisch zulaufenden Spitze (7) und mindestens einer in Langsrichtung verlaufenden Außenrille versehen ist, weiche im Querschnitt einer Öffnung aufweist, die kleiner ist als der Körper der Rille und in die die Ausstülpung (5a, 5b) der Bänder (4) eingreift,
dadurch gekennzeichnet, daß diese Rille bis zu den Enden des Pfostens (1) verläuft und daß der Stützpfahl mit einer konisch zulaufenden Kappe (6) und einer Spitze (7) versehen ist, die an den Enden des genannten Pfostens (1) aufgesteckt sind.

2. Stützpfahl nach Anspruch 1,
dadurch gekennzeichnet, daß der Stützpfahl bis zu 6 Rillen aufweist.

3. Stützpfahl nach einem der Ansprüche 1 oder 2,
dadurch gekennzeichnet, daß der Pfahl (1) aus einer vollen Stange besteht.

4. Stützpfahl nach einem der Ansprüche 1 oder 2,
dadurch gekennzeichnet, daß der Pfahl (1) aus einem Rohr mit dicker Wandung besteht.

5. Stützpfahl nach einem der Ansprüche 1 oder 2,
dadurch gekennzeichnet, daß der Pfahl (1) aus einem fast geschlossenen, dünnen Rohr besteht.

6. Stützpfahl nach einem der Ansprüche 1 bis 5,
dadurch gekennzeichnet, daß die Kappe (6) und die spitze (7) eine konisch-zylindrische Form haben.

7. Stützpfahl nach einem der Ansprüche 1 bis 6,
dadurch gekennzeichnet, daß die Kappe (6) und die Spitze (7) gleich sind.

8. Stützpfahl nach einem der Ansprüche 1 bis 7,
dadurch gekennzeichnet, daß der Pfahl (1) aus Metall besteht.

9. Stützpfahl nach Anspruch 7,
dadurch gekennzeichnet, daß der Pfahl (1) aus Aluminium oder aus einer von dessen Legierungen besteht.

10. Stützpfahl nach einem der Ansprüche 1 bis 8,
dadurch gekennzeichnet, daß die Kappe (6) und die Spitze (7) aus Kunststoff bestehen.
